# EUROPÄISCHE PATENTSCHRIFT

(11) **EP 0 836 042 B1**
(45) Veröffentlichungstag und Bekanntmachung des Hinweises auf die Patenterteilung: **14.02.2001**
(21) Anmeldenummer: 97114445.6
(22) Anmeldetag: 21.08.1997
(51) Int. Cl.: F16L 9/12

(54) **Mehrschichtiges Kunststoffrohr mit segmentierter Sperrschicht**
Layered plastic tube with segmented barrier layer
Tube en matière plastique stratifiée avec couche d'étanchéité segmentée

(30) Priorität: 11.10.1996 DE 19641946
(43) Veröffentlichungstag der Anmeldung: 15.04.1998
(73) Patentinhaber: Degussa-Hüls Aktiengesellschaft, 60287 Frankfurt am Main (DE)
(72) Erfinder: Franosch, Jürgen, 45770 Marl (DE); Ries, Hans, Dr., 45772 Marl (DE); Schmitz, Guido, Dr., 46282 Dorsten (DE)

(56) Entgegenhaltungen:
- EP-A- 0 344 427
- DE-A- 4 238 696
- DE-A- 4 315 177
- DE-A- 4 418 006
- DE-U- 9 304 568
- DE-U- 29 517 902
- US-A- 5 284 184
- US-A- 5 460 771

## Beschreibung

Die Erfindung hat ein permeationsarmes, mehrschichtiges Kunststoffrohr zur Führung von flüssigen oder gasförmigen Medien zum Gegenstand.

Mehrschichtige Kunststoffrohre mit Sperreigenschaften gegen das zu führende Medium sind aus einer Vielzahl von Patentanmeldungen bekannt. Es stellt sich hierbei immer wieder die Frage, wie eine ausreichend gute Haftung zwischen dem zu verwendenden Sperrschichtpolymer und dem zur Gewährleistung der mechanischen Eigenschaften zu verwendenden Polymer hergestellt werden kann. Dies ist insbesondere bei Verwendung von Fluorpolymeren, die sehr gut gegen alkoholhaltige Kraftstoffe sperren, ein großes Problem, das eine aufwendige und damit teure chemische Entwicklung erfordert.

Weiterhin sind für bestimmte Anwendungszwecke Bestrebungen bekannt, das sperrende Polymer in Form von flächenförmigen impermeablen Lamellen, die zu einer Vergrößerung des Diffusionsweges führen und somit die Sperrwirkung erhöhen, in das Trägermaterial einzubetten (JP-A-140 588/92, US 4 410 482, DE-OS 43 15 177). Zur Erzeugung der Lamellen ist aber eine biaxiale Verstreckung erforderlich, die zwar beim Blasformen gegeben ist, nicht aber bei der Extrusion von Rohren. Somit kann der bei blasgeformten Tanks zu nutzende Effekt bei der Rohrextrusion nicht genutzt werden, da sich hier nur unidirektional in Fließrichtung des Rohres verstreckte Fibrillen erzeugen lassen, die nicht zu der gewünschten Sperrwirkung führen.

Daneben ist bekannt, daß bei Rohren, die auf dem Wege der Coextrusion mit Sperrschichten ausgerüstet wurden, die Haftung bei längerem Kontakt mit aggressiven Medien verloren gehen kann. Dies wird insbesondere im Falle der Ablösung der Innenschicht als kritisch angesehen, da eine abgelöste Innenschicht unter bestimmten Betriebsbedingungen den Querschnitt des Rohres in unzulässiger Weise partiell verengen kann und so zur Funktionsbeeinträchtigung führt.

Es wurde daher versucht, Sperrschicht und Außenmantel durch mechanische Verkrallung miteinander zu verbinden (US 5 437 311; DE 42 38 696). Die hierzu erforderlichen Werkzeuge sind jedoch aufwendig in der Herstellung und anfällig im Betrieb. Die eingebrachten Hinterschnitte wirken zudem als Kerben und führen so bei stoßartigen Beanspruchungen zum Versagen des Rohrs.

Die Aufgabe der vorliegenden Erfindung besteht darin, eine Verbindung zwischen Sperrschicht und den übrigen Schichten zu schaffen, die die beschriebenen Nachteile vermeidet. Dieses Aufgabe wird durch ein mehrschichtiges Kunststoffrohr gelöst, das aus mindestens drei Schichten besteht, wobei diese aus mindestens zwei voneinander verschiedenen Polymeren bestehen und das besonders gut gegen Permeation des zu führenden Mediums sperrende Polymer A (Sperrschichtpolymer) in Form zumindest einer Schicht, die mindestens einmal durch das Polymer B (Mantelpolymer) stegartig durchbrochen ist, in das Polymer B eingebettet ist.

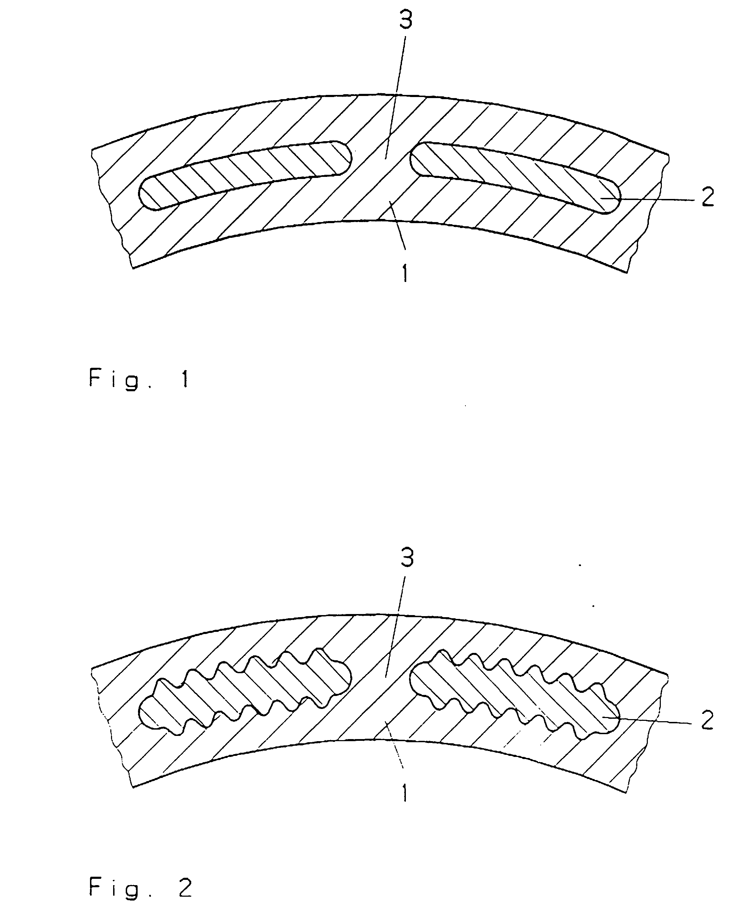

Somit wird eine in mehrere Segmente aufgeteilte Sperrschicht in ein Mantelpolymer eingelagert und die jeweils außen- und innenseitige Schicht des Mantelpolymers über Stege, die die Sperrschicht durchbrechen, miteinander verbunden, wie es in Fig. 1 dargestellt ist. Die Stege sind hierbei vorzugsweise in axialer Richtung des Rohres ausgerichtet, jedoch liegt auch eine beispielsweise spiralförmig um das Rohr herumlaufende Steganordnung im Rahmen der Erfindung.

Die Begriffe "Polymer A" und "Polymer B" schließen hierbei auch Formmassen auf Basis dieser Polymeren (die selbstverständlich auch Copolymere, Terpolymere o. ä. sein können) ein. Die Formmassen können neben dem Basispolymeren die üblichen aus dem Stand der Technik bekannten Zusätze wie Stabilisatoren, Verarbeitungshilfsmittel, Weichmacher, Flammschutzmittel, Viskositätsverbesserer, Füllstoffe, Verstärkungsmittel, Antistatika, Pigmente oder andere Polymere enthalten. Die Füllstoffe bzw. Verstärkungsmittel können auch elektrisch leitfähig sein.

In der einfachsten Ausführungsform (siehe Fig. 1) wird eine einzige Sperrschicht aus dem Polymer A **(2)** in eine Mantelschicht aus dem Polymer B **(1)** eingelagert, so daß eine Schichtenanordnung B/A/B resultiert. Da der Anteil der Stege **(3)** am Umfang in der Summe klein gegenüber dem Anteil der Sperrschicht ist, tritt eine nur geringe Verminderung der Sperrwirkung gegenüber einer geschlossenen Sperrschicht auf.

In einer weiteren Ausführungsform folgen zwei Sperrschichten aus ein und demselben Sperrschichtpolymer oder auch aus unterschiedlichen Sperrschichtpolymeren so aufeinander, daß sie jeweils durch eine Zwischenlage aus dem Mantelpolymer getrennt sind, so daß die Schichtenanordnung B/A/B/A/B oder B/A/B/C/B resultiert. Hier ist es vorteilhaft, wenn die Stege gegeneinander versetzt sind, beispielsweise um eine halbe Segmentlänge, um die Diffusionswege zu maximieren. Darüber hinaus sind entsprechende Ausführungsformen mit mehr als zwei Sperrschichten möglich.

Die Kontaktfläche zwischen Sperrschicht und Mantelschicht kann strukturiert sein, um Tangentialspannungen durch Formschluß zu übertragen, wie es in Fig. 2 beispielhaft dargestellt ist.

Um bei den mechanischen Eigenschaften, wie z. B. Berstdruck oder Schlagzähigkeit, keine unzulässige Verschlechterung zu erhalten, sollte die Dicke der Sperrschichten kleiner sein als 50 % der Gesamtwanddicke, vorzugsweise kleiner als 30 % der Gesamtwanddicke. Genauso sollte die Stegfläche deutlich kleiner sein als die Sperrschichtfläche; vorzugsweise sollte in einer Schicht der Teil des Umfangs, der auf die Stege entfällt, weniger als 20 % des Gesamtumfanges ausmachen.

Die Segmente einer durchbrochenen Sperrschicht können jeweils innerhalb einer diskreten Schicht die gleiche oder auch verschiedene Kreisbogenlängen besitzen. Genauso können die Stege jeweils entweder gleiche oder verschiedene Breiten aufweisen. Darüber hinaus kann sowohl die Kreisbogenlänge eines Segments als auch die Breite eines Steges über die Rohrlänge gesehen konstant sein oder sich ändern.

Es ist weiterhin möglich, sowohl Sperrschichtpolymere einzusetzen, die mit dem jeweiligen Mantelpolymeren verträglich sind, als auch solche, die es nicht sind. Dies ist ein wesentlicher Vorteil der vorliegenden Erfindung, da eine aufwendige Werkstoffmodifikation nicht zwingend erforderlich ist und somit nahezu beliebige, auf die Anwendung zugeschnittene Werkstoffkombinationen verwendet werden können.

Darüber hinaus kann das Rohr auch zwei verschiedene, miteinander kompatible oder über einen Haftvermittler miteinander verbundene Mantelschichten enthalten, in die jeweils mindestens eine segmentierte Sperrschicht eingelagert sein kann. Die in die unterschiedlichen Mantelschichten eingelagerten Sperrschichtpolymere können aus dem gleichen Material bestehen oder aber auch verschieden sein. Somit sind beispielsweise folgende Schichtenanordnungen denkbar:
B/A/B/D/A/D
B/A/B/HV/D
B/A/B/HV/D/A/D
B/A/B/D/C/D
B/A/B/HV/D/C/D
B/A/B/A/B/D/A/D
B/A/B/A/B/D/C/D/C/D
mit
- B, D =: Mantelpolymere
- A, C =: Sperrschichtpolymere und
- HV =: Haftvermittler.

Das erfindungsgemäße Rohr kann antistatisch ausgerüstet werden; dies ist besonders bei der Förderung brennbarer Stoffe angezeigt. Geeignete Methoden hierzu sind Stand der Technik. Beispielsweise kann die Mantelschicht B einen elektrisch leitfähigen Zusatz enthalten. Aus anwendungstechnischen Gründen und aus Gründen der Materialersparnis empfiehlt es sich jedoch, statt dessen eine dünne elektrisch leitfähige Innenschicht anzubringen, wie es aus DE 40 25 301 bekannt ist. Das Material der Innenschicht ist so zu wählen, daß ein stoffschlüssiger Verbund mit der nächstfolgenden Schicht erhalten wird. Eine weitere Möglichkeit besteht darin, die Sperrschicht bzw. eine der Sperrschichten elektrisch leitfähig auszurüsten.

Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder besonders vorteilhaft Graphitfibrillen verwendet werden. Es können auch Mischungen verschiedener leitfähiger Zusätze eingesetzt werden.

Graphitfibrillen werden beispielsweise in Plastics World, November 1993, Seite 10 f beschrieben. Es handelt sich um winzige Fasern aus kristallinem Graphit. Beim derzeit kommerziell erhältlichen Material liegt ihr durchschnittlicher Durchmesser in der Größenordnung um 0,01 micron mit einem L/D-Verhältnis in der Größenordnung um 500 : 1 bis 1 000 : 1. Grundsätzlich geeignet für den Zweck der vorliegenden Erfindung sind auch Graphitfibrillen, wie sie in den WO-Anmeldungen Nr. 8603455, 8707559, 8907163, 9007023 und 9014221 sowie in JP-A-03287821 beschrieben sind.

Der Gehalt an Graphitfibrillen in der Formmasse beträgt in der Regel 1 bis 30 Gew.-%, vorzugsweise 1,5 bis 10 Gew.-% und besonders bevorzugt 2 bis 7 Gew.-%.

Die mechanischen Eigenschaften der erfindungsgemäßen Rohre werden in erster Linie durch das Material der Mantelschicht(en) bestimmt, so daß auf die Erfahrungen bei einschlägigen Monorohren zurückgegriffen werden kann. Die Materialauswahl richtet sich nach dem jeweiligen Anwendungszweck, so daß keine allgemeingültigen Empfehlungen ausgesprochen werden können. Für die Verwendung im Kraftfahrzeugbereich, die hier als Beispiel genannt werden soll, ist eine hohe Reißdehnung, gute Verformbarkeit und hohe Schlagzähigkeit, insbesondere auch bei tiefen Temperaturen, erforderlich.

Im allgemeinen eignen sich für die Mantelschicht beispielsweise Polyamide, Polyolefine oder Polyketone. Polyketone sind alternierende Copolymere von Kohlenmonoxid und α-Olefinen; sie werden beispielsweise in A. Wakker et al., Kunststoffe **85** (1995) 8, in EP-A-0 121 965 und EP-A-0 181 014 beschrieben.

Für die Sperrschicht können beispielsweise aromatische Polyamide wie PA 6,3T, PA MXD6, thermoplastische Polyester wie z. B. Polybutylenterephthalat, Polyethylenterephthalat, Polybutylennaphthalat oder Polyethylennaphthalat, Fluorpolymere wie Polyvinylidenfluorid (PVDF), Ethylen-Tetrafluorethylen-Copolymere (ETFE), Tetrafluorethylen-Hexafluorpropen-Vinylidenfluorid-Terpolymere (THV) oder Ethylen-Chlortrifluorethylen-Copolymere (ECTFE), Ethylen-Vinylalkohol-Copolymere (EVOH), Polyolefine, Polyketone oder Polyacetale verwendet werden. Die Verwendung derartiger Polymerer in mehrschichtigen Kunststoffrohren ist Stand der Technik.

Darüber hinaus können die erfindungsgemäßen Rohre zusätzlich eine Außenschicht aus einem Elastomer wie z. B. Ethylen-Propylen-Kautschuk (EPM), Ethylen-Propylen-Dien-Kautschuk (EPDM), hydrierten Styrol-Butadien-Styrol-Blockcopolymeren (SEBS) oder Polyetheresteramiden enthalten. EPM, EPDM oder SEBS können auch zum Zweck einer besseren Haftung auf einem polaren Mantelpolymeren mit einer ungesättigten Carbonsäure oder einem Derivat davon, beispielsweise mit Maleinsäureanhydrid, funktionalisiert sein. Entsprechende Verbunde sind beispielsweise in der EP-A-0 344 427 beschrieben.

In der Tabelle 1 sind zur Illustration einige mögliche Stoffkombinationen angegeben.

**Tabelle 1**

| **Typ** | **Aufbau (von außen nach innen)** | **Sperrschichtwerkstoff** |
|---|---|---|
| B/A/B | PA12/PBT/PA12 | PBT |
| | PA12/PVDF/PA12 | PVDF |
| B/A/B/D | PA12/PBT/PA12/PA12 leitfähig | PBT |
| B/HV/D/A/D | PA12/HV/PA6/EVOH/PA6 ^{a)} | EVOH |
| B/A/B/A/B | PA12/PVDF/PA12/PVDF/PA12 | PVDF |
| B/A/B/C/B | PA12/PVDF/PA12/PBT/PA12 | PVDF; PBT |
| B/A/B/HV/D/C/D | PA12/PVDF/PA12/HV/PA6/EVOH/PA6 ^{a)} | PVDF; EVOH |

| | | |
|---|---|---|
| ^{a)} HV = Haftvermittler | | |

Die erfindungsgemäßen Rohre können, je nach Anwendungszweck, entweder als glattes Rohr oder auch als Wellrohr (US 5 460 771) vorliegen. In einer weiteren Ausführungsform enthält ein derartiges Rohr sowohl glatte als auch gewellte Abschnitte (US 5 284 184).

Die erfindungsgemäßen Rohre werden vorzugsweise auf dem Wege der Coextrusion hergestellt, wobei die Segmentierung durch die spezielle Ausführung der Werkzeugteile, die zur Erzeugung der Sperrschichten dienen, erreicht wird.

Geht man z. B. von dem einfachsten Aufbau B/A/B aus, so werden die beiden Mantelschichten getrennt voneinander erzeugt. Die Werkzeugtechnik hierzu ist aus der Mono- und Coextrusion hinlänglich bekannt. Zur Erzeugung gibt es nun mehrere Varianten. Einerseits kann das Sperrschichtpolymer A in mehrere Teilströme aufgeteilt werden, wobei jeder Teilstrom ein Segment speist. Das Zusammenfließen der Teilströme wird hierbei durch Fließhindernisse verhindert. Andererseits kann das Sperrschichtpolymer A zunächst in eine Kreisringströmung aufgeteilt werden, die dann nachträglich durch Fließhindernisse in mehrere Segmente aufgeteilt wird. Bei beiden Varianten ist dann die Werkzeugkonstruktion so ausgelegt, daß beim Zusammenführen der Schmelzeströme aus Mantelmaterial B und Sperrschichtmaterial A die Stege zwischen den Sperrschichtströmungen durch das Mantelmaterial B gefüllt werden, so daß das Sperrschichtmaterial nicht zusammenfließen kann.

Denkbar ist auch, daß anstelle der Fließhindernisse gleich separate Schmelzeströme aus dem Mantelmaterial B, die die Stege bilden, eingespeist werden.

Eine weitere Möglichkeit besteht darin, daß das Sperrschichtmaterial an mehreren Stellen über dem Umfang (entsprechend der Anzahl der Segmente) in die Mitte der Kreisringströmung injiziert wird. Dies bildet dann die Sperrschicht im Mantelmaterial aus.

Durch Zusammenführen von mehreren entsprechend vorbehandelten 3-Schicht-Strömungen ist es dann möglich, Verbunde mit mehreren Sperrschichten und gegeneinander versetzten Stegen zu erhalten.

Ebenso können erfindungsgemäße Rohre in einem mehrstufigen Prozeß mittels Querspritzkopf hergestellt werden.

Die erfindungsgemäßen Rohre finden vielfältige Anwendung beispielsweise als Kraftstoffleitung, Tankeinfüllstutzen, Vapor Line (d. h. Leitung, in der Kraftstoffdämpfe geleitet werden, z. B. Entlüftungsleitungen) oder als Tankstellenleitung.

## Patentansprüche

1. Mehrschichtiges Kunststoffrohr, das aus mindestens drei Schichten besteht, wobei diese aus mindestens zwei voneinander verschiedenen Polymeren bestehen und das besonders gut gegen Permeation des zu führenden Mediums sperrende Polymer (2) (Sperrschichtpolymer) in Form zumindest einer Schicht, die mindestens einmal durch das Polymer (1) (Mantelpolymer) stegartig (3) durchbrochen ist, in das Polymer (1) eingebettet ist.

2. Mehrschichtiges Kunststoffrohr gemäß Anspruch 1, bei dem mindestens zwei Sperrschichten aus ein und demselben Sperrschichtpolymer so aufeinander folgen, daß sie jeweils durch eine Zwischenlage aus dem Mantelpolymer getrennt sind.

3. Mehrschichtiges Kunststoffrohr gemäß Anspruch 1, bei dem mindestens zwei Sperrschichten aus verschiedenen Sperrschichtpolymeren so aufeinander folgen, daß sie jeweils durch eine Zwischenlage aus dem Mantelpolymer getrennt sind.

4. Mehrschichtiges Kunststoffrohr gemäß einem der Ansprüche 2 oder 3, bei dem die Stege gegeneinander versetzt sind.

5. Mehrschichtiges Kunststoffrohr gemäß einem der vorhergehenden Ansprüche,
dadurch gekennzeichnet,
daß die Segmente einer durchbrochenen Sperrschicht jeweils innerhalb einer diskreten Schicht die gleiche Kreisbogenlänge haben.

6. Mehrschichtiges Kunststoffrohr gemäß einem der vorhergehenden Ansprüche, das zwei verschiedene, miteinander kompatible oder über einen Haftvermittler miteinander verbundene Mantelschichten enthält, in die jeweils mindestens eine segmentierte Sperrschicht eingelagert ist.

7. Mehrschichtiges Kunststoffrohr gemäß einem der vorhergehenden Ansprüche,
dadurch gekennzeichnet,
daß es antistatisch ausgerüstet ist.

8. Mehrschichtiges Kunststoffrohr gemäß einem der vorhergehenden Ansprüche,
dadurch gekennzeichnet,
daß es zusätzlich eine Außenschicht aus einem Elastomer enthält.

9. Mehrschichtiges Kunststoffrohr gemäß einem der vorhergehenden Ansprüche,
dadurch gekennzeichnet,
daß es als Wellrohr vorliegt.

10. Mehrschichtiges Kunststoffrohr gemäß einem der vorhergehenden Ansprüche,
dadurch gekennzeichnet,
daß es sowohl glatte als auch gewellte Abschnitte enthält.

11. Verwendung des mehrschichtigen Kunststoffrohrs gemäß einem der vorhergehenden Ansprüche als Kraftstoffleitung, Tankeinfüllstutzen, Vapor Line oder als Tankstellenleitung.

## Revendications

1. Tube en matière plastique à plusieurs couches, qui consiste en au moins trois couches,
dans lequel
celles-ci sont formées d'au moins deux polymères différents l'un de l'autre, et le polymère (2) qui fait barrage particulièrement bien contre la perméation du milieu à conduire (polymère de couche de barrage) est inclus dans le polymère (1), sous forme d'au moins une couche qui est interrompue au moins une fois par le polymère (1) (polymère d'enveloppe) sous forme d'entretoise (3).

2. Tube en matière plastique à plusieurs couches selon la revendication 1,
caractérisé en ce qu'
au moins deux couches de barrage à base d'un et même polymère de couche de barrage, se suivent l'une au-dessus de l'autre de façon qu'elles soient séparées respectivement par une position intermédiaire, du polymère d'enveloppe.

3. Tube en matière plastique à plusieurs couches selon la revendication 1,
caractérisé en ce qu'
au moins deux couches de barrage en polymères de couche de barrage différents, se suivent l'une au-dessus de l'autre, de façon qu'elles soient séparées du polymère d'enveloppe par une position intermédiaire.

4. Tube en matière plastique à plusieurs couches selon l'une quelconque des revendications 2 ou 3,
caractérisé en ce que
les entretoises sont appliquées l'une contre l'autre.

5. Tube en matière plastique à plusieurs couches selon l'une quelconque des revendications précédentes,
caractérisé en ce que
les segments d'une couche de barrage interrompue à chaque fois à l'intérieur d'une couche unitaire, ont la même longueur d'arc de cercle.

6. Tube en matière plastique à plusieurs couches selon l'une quelconque des revendications précédentes,
contenant deux couches d'enveloppe différentes, compatibles l'une avec l'autre, ou reliées l'une avec l'autre par l'intermédiaire d'un adjuvant d'adhésion, dans lesquelles respectivement au moins une couche de barrage segmentée est insérée.

7. Tube en matière plastique à plusieurs couches selon l'une quelconque des revendications précédentes,
caractérisé en ce qu'
il est équipé d'une manière antistatique.

8. Tube en matière plastique à plusieurs couches selon l'une quelconque des revendications précédentes,
caractérisé en ce qu'
il contient en supplément une couche extérieure en élastomère.

9. Tube de matière plastique à plusieurs couches selon l'une quelconque des revendication précédentes,
caractérisé en ce qu'
il se présente sous forme de tube ondulé.

10. Tube en matière plastique à plusieurs couches selon l'une quelconque des revendications précédentes,
caractérisé en ce qu'
il contient des sections aussi bien lisses qu'ondulées.

11. Utilisation du tube en matière plastique à plusieurs couches selon l'une quelconque des revendications précédentes comme conduite de carburant, orifice de remplissage de réservoir, de ligne à vapeur « vapor line » ou comme conduite de station d'essence.

## Claims

1. A multilayer plastic pipe which is composed of at least three layers which are composed of at least two polymers different from each other, where, embedded into the polymer (1) (jacket polymer) there is at least one layer of the polymer (2) (barrier-layer polymer) which is a particularly effective barrier to permeation of the medium to be conveyed, and the layer has at least one interruption by the polymer (1) in the manner of a fillet (3).

2. A multilayer plastic pipe according to claim 1, in which at least two barrier layers made from one and the same barrier-layer polymer follow one another in such a way that in each case they have been separated by an intermediate layer made from the jacket polymer.

3. A multilayer plastic pipe according to claim 1, in which at least two barrier layers made from different barrier-layer polymers follow one another in such a way that in each case they have been separated by an intermediate layer made from the jacket polymer.

4. A multilayer plastic pipe according to any one of claims 2 or 3, in which the fillets have been displaced with respect to one another.

5. A multilayer plastic pipe according to any one of the preceding claims,
characterized in that
within one discrete layer, each segment of an interrupted barrier layer has the same arc length.

6. A multilayer plastic pipe according to any one of the preceding claims, which comprises two different jacket layers, compatible with one another or connected to one another via an adhesion promoter, into each of which at least one segmented barrier layer has been inserted.

7. A multilayer plastic pipe according to any one of the preceding claims,
characterized in that
the pipe has been rendered antistatic.

8. A multilayer plastic pipe according to any one of the preceding claims,
characterized in that
the pipe also comprises an outer layer made from an elastomer.

9. A multilayer plastic pipe according to any one of the preceding claims,
characterized in that
the pipe is a corrugated pipe.

10. A multilayer plastic pipe according to any one of the preceding claims,
characterized in that
the pipe comprises both smooth and corrugated sections.

11. Use of the multilayer plastic pipe according to any one of the preceding claims as a fuel line, a pipe section for tank-filling, a vapour line or a fuel-pump line.
